# EUROPEAN PATENT APPLICATION

(11) **EP 4 062 811 A1**
(43) Date of publication of application: **28.09.2022**
(21) Application number: 20887426.3
(22) Date of filing: 04.11.2020
(51) Int. Cl.: A47J 37/07

(54) **MODULARIZED MULTIFUNCTIONAL ELECTRONIC IRON GRIDDLE**

(30) Priority: 15.11.2019 CN 201921977234 U
(71) Applicant: Yin, Daniel, Jinan, Shandong 250100 (CN)
(72) Inventor: Yin, Daniel, Jinan, Shandong 250100 (CN)
(74) Representative: Sach, Greg Robert
(86) International application number: PCT/CN2020/126558
(87) International publication number: WO 2021/093661

(57) **Abstract**

A modularized multifunctional electronic iron griddle. The modularized multifunctional electronic iron griddle comprises a top panel (6), an inner panel (9), a mounting recess (7), and an electronic assembly which are arranged from top to bottom; the electronic assembly comprises an outer frame (11) and a plurality of induction coils (10) arranged within the outer frame (11), each of the induction coils (10) generates heat independently; the top panel (6) is divided into a plurality of independent heating spaces and one operating area (8) by a division grid (5), the heating spaces being used for placing heating panels (1, 2, 3, 4); each heating panel (1, 2, 3, 4) is arranged corresponding to each induction coil (10) so as to generate an electromagnetic heating effect with the induction coil (10) or any pots or pans placed atop the heating panel (1, 2, 3, 4). By means of such structural design, heating can be separately controlled for different heating panel (1, 2, 3, 4) areas, and the iron griddle can be heated by utilizing the electromagnetic heating principle. In addition, the plurality of heating panels (1, 2, 3, 4) are combined together to form a complete plane, so that it is more convenient to clean and food can be directly heated.

## Description

### CROSS-REFERENCES TO RELATED APPLICATIONS

This application claims the priority of the Chinese patent application with the application number 2019219772346 and the title "a modular multifunctional electronic griddle" filed with the Chinese Patent Office on November 15, 2019, the entire content of which is incorporated by reference In this application.

### BACKGROUND

### Technical field

The present disclosure relates to the technical field of home appliances, and in particular to a modular multifunctional electronic griddle.

### Background technique

In daily life, we use gas stoves or electric stoves to heat pots to complete the work of heating food. Some people also have a household griddle that can heat things directly on the surface.

However, traditional household griddle has a large area, slow heating adjustment speed, and fast surface heat dissipation, which seriously wastes energy and cannot precisely target a region for heating. As a result, the traditional griddle cannot function as an electric stovetop and cannot be used to effectively heat pots and pans.

### SUMMARY

The embodiments of the present disclosure provide a modular multifunctional electronic griddle, which includes a top panel, an inner panel, a mounting recess and electronic components arranged from top to bottom, The electronic component includes an outer frame and a plurality of induction coils arranged in the outer frame, each induction coil is configured to independently generate heat. The length and width of the top panel are both greater than the length and width of the mounting recess. The top panel is divided into a plurality of independent heating spaces and an operating area by a partition grid. Respective heating spaces are configured to allow heating panels to be placed thereon, and each heating panel is set corresponding to one of the induction coils, and is configured to and is configured to interact with the induction coils to generate electromagnetic heating effects.

Optionally, the material of at least one heating panel of the plurality of heating panels is different from that of the remaining heating panels.

Optionally, each of the plurality of heating panels are respectively made of different materials.

Optionally, the length and width of each heating panel gradually decreases from top to bottom along the thickness direction of the heating panel.

Optionally, the upper surface of the top panel is flush with the upper surfaces of the plurality of heating panels and the partition grid.

Optionally, the partition grid is made of heat-insulating material.

Optionally, the outer frame of the electronic component is embedded in the installation groove, so that the frame wall of the outer frame fits exactly with the groove wall of the installation groove.

Optionally, the inner panel is a heat insulation panel.

Optionally, the heat insulation panel is made of a material that is non-ferromagnetic and has a heat insulation effect.

Optionally, at least one heating panel of the plurality of heating panels is a high-ferromagnetic material layer.

Optionally, at least one of the plurality of heating panels is a composite layer including a top-down heating surface layer and a high-ferromagnetic material layer.

Optionally, the heating surface layer is a ceramic material layer or an aluminum layer.

Optionally, at least one heating panel of the plurality of heating panels is a composite layer including a top-down surface treatment layer and a high-ferromagnetic material layer.

Optionally, the surface treatment layer is a Teflon non-stick treatment layer or a porcelain treatment layer.

Optionally, at least one heating panel of the plurality of heating panels is an insulating layer.

Optionally, there are 4 heating panels and 4 induction coils respectively.

### BRIEF DESCRIPTION OF THE DRAWINGS

Fig. 1 is a schematic diagram of a three-dimensional structure of a modular multifunctional electronic griddle provided by an embodiment of the present disclosure;
Fig. 2 is a schematic structural diagram of a modularized multifunctional electronic griddle provided by an embodiment of the present disclosure in a decomposed state;
Fig. 3 is a schematic diagram of the overall structure of a heating panel provided by an embodiment of the present disclosure;
Fig. 4 is a schematic diagram of the first structure of the heating panel shown in Fig. 3 after being dissected along the dissecting plane A-A;
Fig. 5 is a schematic diagram of the second structure of the heating panel shown in Fig. 3 after being dissected along the dissecting plane A-A;
Fig. 6 is a schematic diagram of the third structure of the heating panel shown in Fig. 3 after being dissected along the dissecting plane A-A;
Fig. 7 is a schematic diagram of the fourth structure of the heating panel shown in Fig. 3 after being dissected along the dissecting plane A-A.

Explanation of labels in the figure: 1, 2, 3, 4, heating panel; 5, partition grid; 6, top panel; 7, installation slot; 8, operation area; 9, inner panel; 10, induction coil; 11, exterior Frame; 12. ferromagnetic material layer; 13. Heating surface layer; 14. Surface treatment layer; 15. Heat insulation layer.

### DETAILED DESCRIPTION

In order to facilitate the understanding of the present disclosure, the present disclosure will be described more fully below with reference to the relevant drawings. The preferred embodiments of the present disclosure are shown in the accompanying drawings. However, the present disclosure can be implemented in many different forms and is not limited to the embodiments described herein. On the contrary, the purpose of providing these embodiments is to have a more thorough and comprehensive understanding of the disclosure of the present disclosure.

Unless otherwise defined, all technical and scientific terms used herein have the same meaning as commonly understood by those skilled in the technical field of the present disclosure. The terms used in the specification of the present disclosure herein are only for the purpose of describing specific embodiments, and are not intended to limit the present disclosure. The term "and/or" as used herein includes any and all combinations of one or more related listed items. The present disclosure provides a modular multifunctional electronic griddle, which is provided with a plurality of heating panels with independent heating, can be independently heated for different areas by using the principle of electromagnetic heating, and can be used for heating the pot.

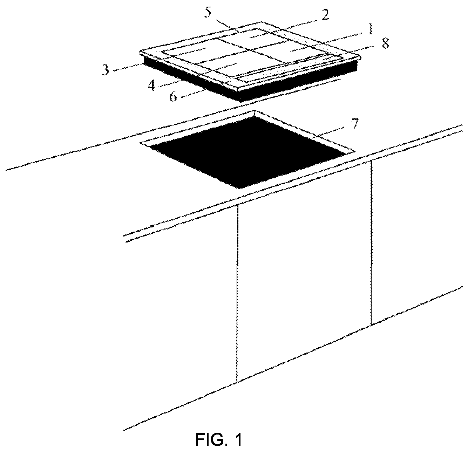

Reference is made to Figures 1 to 4. As shown in the figures, an embodiment of the present disclosure provides a modular multifunctional electronic griddle. The overall structure includes a top panel 6, an inner panel 9 and electronic components arranged from top to bottom. The electronic components include an outer frame 11 and a plurality of induction coils 10 arranged in the outer frame 11. Each induction coil 10 can be heated independently. The length and width of the top panel 6 are greater than the length and width of the mounting recess 7 of a countertop, on the top panel 6. The modular multifunctional electronic griddle is divided into a plurality of independent heating spaces and an operation area 8 by the partition column 5. The heating space is used to place heating panels 1, 2, 3, 4, and each heating panel is arranged corresponding to an induction coil 10 so as to correspond to the induction coil 10. Mutually produce electromagnetic heating effect.

In this application, through independently designed induction coils and heating panels, the effect of independent heating for a specific area can be achieved, so that precise heating control of a small area can be achieved. The top panel 6 serves as the surface and frame of the overall stove. It is flush with multiple heating panels and partition grids, forming a complete plane as a whole, which is easy to clean. The partition grid is made of heat-insulating material, which can effectively prevent heat conduction between different heating panels.

This application uses the principle of electromagnetic heating, so that electronic griddle can be used for heating pots, etc., so as to have the effect of an induction cooker.

The length and width of the top panel 6 are greater than the length and width of the mounting groove 7, and the length and width of the outer frame 11 of the electronic component can match the length and width of the mounting groove 7. That is, the outer frame 11 of the electronic component is embedded in the mounting groove 7. In this way, the frame wall of the outer frame 11 of the electronic component can fit exactly with the groove wall of the installation groove 7, so that the embedded installation of the whole electronic griddle can be realized. The installation is simple and convenient, and the disassembly is convenient.

Specifically, the operation area 8 may be a capacitive touch screen that controls people and the partition grid, so as to control the temperature of the heating area.

Among them, the inner panel 9 is a heat-insulating panel, which is specifically made of a material that is non-ferromagnetic and has a heat-insulating effect, and its function is to prevent the electronic components from overheating and not generate heat with the induction coil.

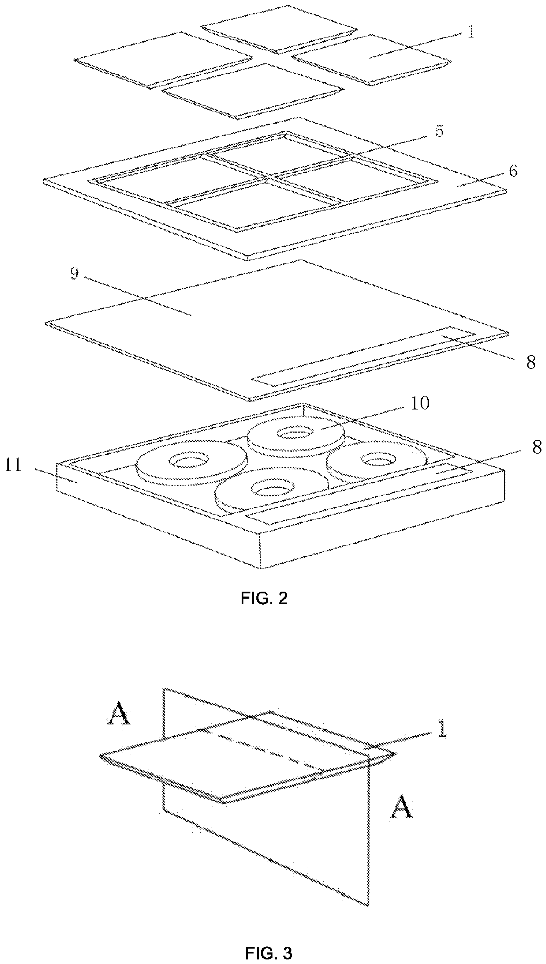

Reference is further made to FIGS. 3-7. The heating panel in the present disclosure can be a heating panel that selects different material combinations, so as to provide users with a cooking experience with custom functions. Specifically, the heating panel in the present disclosure includes a high-ferromagnetic material layer 12; or a composite layer including a top-down heating surface layer 13 and a high-ferromagnetic material layer 12; or a composite layer including a top-down surface treatment layer 14 and a high-ferromagnetic material layer 12; or one of the thermal layers 15.

Since the electronic griddle of the present disclosure has both the griddle function and the induction cooker function, multiple heating panels can have a variety of different material combinations and designs. Preferably, at least one of the plurality of heating panels is of a different material from the remaining heating panels. Preferably, the plurality of heating panels are respectively made of different materials. Through this design of different materials and combinations, the electronic griddle of the present application can realize different functions according to the actual needs of users, such as griddle function or induction cooker function and other heating functions, cutting board function, etc.. The heating panels are all made of high-ferromagnetic metal materials, which can produce electromagnetic heating effect with the induction coil.

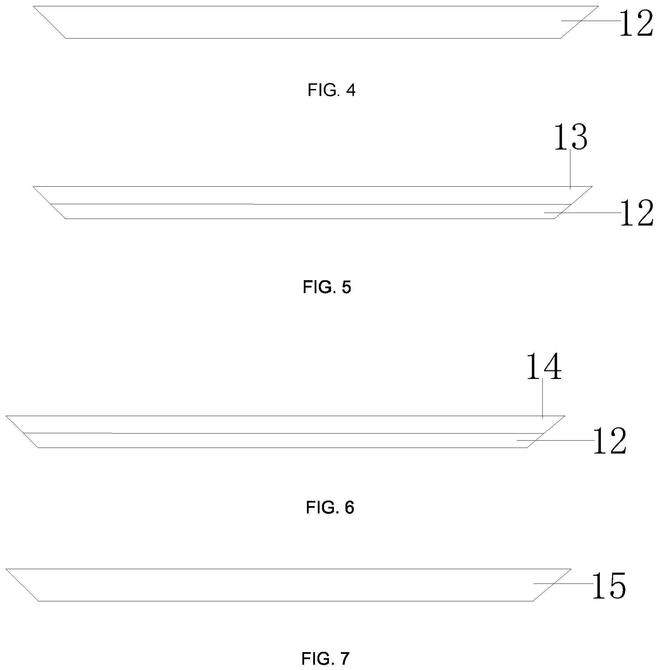

Preferably, as shown in Fig. 4, the heating panel is made of a whole piece of high-ferromagnetic material, which heats up the fastest, but its surface does not require special treatment.

Preferably, as shown in Figure 5, the heating panel is a heating layer with a double heating effect, which specifically includes a heating surface layer and a high-ferromagnetic material layer disposed under the heating surface layer. The heating surface layer can be made of other heating materials, such as ceramic materials or aluminum, copper materials, etc., but the main heating effect comes from the high-ferromagnetic material layer to achieve a more gentle heating effect.

Preferably, as shown in Figure 6, the heating panel is a surface-treated heating layer, which specifically includes a top-down surface treatment layer and a high-ferromagnetic material layer. The surface treatment layer is formed by performing surface treatment on the high-ferromagnetic material layer. , Such as Teflon non-stick treatment layer or porcelain treatment layer, to achieve, for example, non-stick pan heating effect or barbecue heating effect.

Preferably, as shown in Figure 7, the heating panel is a heat-insulating layer, and the heat-insulating layer does not have a heating function. It can be made of conventional heat-insulating materials, so that it can also be used as a cutting board or dish when needed..

Through the design of a variety of material combinations, different heating effects can be achieved and auxiliary tools for cooking can be provided.

As shown in Figure 2-7, the length and width of each heating panel gradually decreases from top to bottom along the thickness direction of the heating panel, so as to be better embedded and installed in the corresponding heating space to achieve convenient Installation and disassembly effect.

In a specific implementation, there are four heating panels and four induction coils respectively, so that the effect of heating four different areas separately can be achieved, but it is not limited to this. The number of heating panels and induction coils can also be more, so that more areas can be heated differently, so as to achieve more different heating effects.

The above detailed description of the modular multifunctional electronic griddle of the present disclosure with reference to the accompanying drawings of the specification is provided by way of example. It can be understood that the modular multifunctional electronic griddle of the present disclosure includes a top panel and an inner panel arranged from top to bottom, installed in a mounting recess and electronic components. The electronic component includes an outer frame and multiple induction coils set in the outer frame. Each induction coil generates heat independently. The length and width of the top panel are greater than the length and width of the mounting recess. The outer frame of the electronic component is embedded in an installation groove. the frame wall of the outer frame of the electronic component can fit exactly with a groove wall of the installation groove. The top panel is divided into multiple independent heating spaces and an operating area by a partition grid. The heating space is used includes the heating panel. Each heating panel is corresponding to each induction coil to generate electromagnetic heating effect with the induction coil. The multiple heating panels can have a variety of different material combinations and designs. Through this structural design, heating can be individually controlled for different heating panel areas, and the principle of electromagnetic heating can be used to heat the pot. In this way, the electronic griddle has both the griddle function and the function of an induction cooker, and can even have other non-heating auxiliary functions such as a cutting board or a dinner plate, and finally achieve multiple uses.

Because the heating panel is designed through a combination of multiple materials, it not only meets the heating requirements, but also effectively insulates it, and allows users to customize the cooking tools and processes. It integrates multiple functions to meet different needs.

The above are only the embodiments of the present disclosure, and do not limit the scope of the present disclosure. Any equivalent structure or equivalent process transformation made by using the contents of the specification and drawings of the present disclosure, or directly or indirectly applied to other related technologies All fields are included in the scope of patent protection of the present disclosure in the same way.

### Industrial applicability

The modular multifunctional electronic griddle of the present disclosure includes a top panel, an inner panel, a mounting recess, and an electronic component arranged from top to bottom. The electronic component includes an outer frame and a plurality of induction coils arranged in the outer frame. Each induction coil generates heat independently. The length and width of the top panel are greater than the length and width of the installation slot. The outer frame of the electronic component is embedded in the installation slot, so that the frame wall of the outer frame of the electronic component can fit exactly with the groove wall of the installation slot. The top panel is divided into multiple independent heating spaces and an operating area by a partition grid. The heating space is used to place heating panels, and each heating panel is arranged corresponding to each induction coil to generate electromagnetic heating effect with the induction coil. Among them, multiple heating panels can have a variety of different material combinations and designs. Through this structural design, heating can be individually controlled for different heating panel areas, and the principle of electromagnetic heating can be used to heat the pot. In this way, the electronic griddle has both the griddle function and the function of an induction cooker, and can even have other non-heating auxiliary functions such as a cutting board or a dinner plate, and finally achieve multiple uses.

## Claims

1. A modular multifunctional electronic griddle including a top panel, an inner panel, and electronic components arranged from top to bottom;, the electronic griddle includes an outer frame and a plurality of induction coils arranged in the outer frame, each induction coil is configured to independently generate heat, the length and width of the top panel are both greater than the length and width of a mounting recess into which the griddle is mountable; an upper part is divided into a plurality of independent heating spaces and an operation area by a partition;the heating space is configured to allow a plurality of heating panels to be placed thereon, and each heating panel is arranged corresponding to one of the induction coils, and is configured to interact with the induction coils to produce an electromagnetic heating effect.

2. The modular multifunctional electronic griddle according to claim 1, wherein at least one of the plurality of heating panels has a different material from the rest of the heating panels.

3. The modular multifunctional electronic griddle according to claim 1 or 2, wherein the plurality of heating panels are respectively made of different materials.

4. The modular multifunctional electronic griddle according to any one of claims 1-3, wherein the length and width of each heating panel gradually decreases from top to bottom along the thickness direction of the heating panel .

5. The modular multifunctional electronic griddle according to any one of claims 1 to 4, wherein the upper surface of the top panel is flush with the upper surfaces of the plurality of heating panels and the partition.

6. The modular multifunctional electronic griddle according to any one of claims 1 to 5, wherein the partition is made of heat insulating material.

7. The modular multifunctional electronic griddle according to any one of claims 1-6, wherein the outer frame of the electronic component is to be embedded in the mounting recess so that the outer frame just fits with mounting recess.

8. The modular multifunctional electronic griddle according to any one of claims 1-7, wherein the inner panel is a heat insulation panel.

9. The modular multifunctional electronic griddle according to claim 8, wherein the heat insulation panel is made of a material that is non-ferromagnetic and has a heat insulation effect.

10. The modular multifunctional electronic griddle according to any one of claims 1-9, wherein at least one of the plurality of heating panels is a ferromagnetic material layer.

11. The modular multifunctional electronic griddle according to any one of claims 1-10, wherein at least one heating panel of the plurality of heating panels includes a top-down heating surface and a composite layer of magnetic material layer.

12. The modular multifunctional electronic griddle according to claim 11, wherein the heating surface layer is a ceramic material layer or an aluminum layer.

13. The modular multifunctional electronic griddle according to any one of claims 1-12, wherein at least one of the plurality of heating panels includes a top-down surface treatment layer and a composite layer of ferromagnetic material layer.

14. The modular multifunctional electronic griddle according to claim 13, wherein the surface treatment layer is a Teflon non-stick treatment layer or a porcelain treatment layer.

15. The modular multifunctional electronic griddle according to any one of claims 1-14, wherein at least one heating panel of the plurality of heating panels is an insulating layer.

16. The modular multifunctional electronic griddle according to any one of claims 1-15, wherein there are 4 heating panels and 4 induction coils respectively.
